# EUROPEAN PATENT SPECIFICATION

(11) **EP 4 570 465 B1**
(45) Date of publication and mention of the grant of the patent: **29.04.2026**
(21) Application number: 23214145.7
(22) Date of filing: 05.12.2023
(51) Int. Cl.: B29C 31/08, B29C 70/38

(54) **AIR ASSISTED PREPREG APPLICATION APPARATUS AND SYSTEM**
VORRICHTUNG UND SYSTEM ZUR LUFTUNTERSTÜTZTEN PREPREG-APPLIKATION
APPAREIL ET SYSTÈME D'APPLICATION DE PRÉIMPRÉGNÉ ASSISTÉ PAR AIR

(43) Date of publication of application: 18.06.2025
(73) Proprietor: Airbus Operations GmbH, 21129 Hamburg (DE)
(72) Inventor: Meyer, Tobias, 21129 Hamburg (DE); Gillessen, Alexander, 21129 Hamburg (DE)
(74) Representative: Schornack, Oliver

(56) References cited:
- CN-A- 108 274 781
- FR-A1- 3 133 334
- JP-A- 2005 297 513
- US-A1- 2011 011 537
- US-A1- 2017 080 646
- US-B2- 7 222 710

## Description

The present disclosure generally relates to a prepreg application apparatus and a system for applying a prepreg to a mould. Particularly, the present disclosure relates to a prepreg application apparatus having a porous surface through which air from an air supply duct can emanate at least in a region where the porous surface is on or close to a prepreg. Furthermore, the present disclosure relates to a prepreg application system comprising a mould and such a prepreg application apparatus.

In conventional systems a prepreg is laid out on a mould using (draping) rollers moved manually or automatically, wherein the rollers press the prepreg onto the mould or onto already laid out prepreg(s). Such rollers usually have a rubbery or metallic surface that contact the prepreg.

However, some material of the prepreg, such as a resin, can stick to the draping rollers. This requires regular cleaning and/or blades at the rollers scraping material stuck to the rollers. Otherwise, the tacky material sticking to the rollers may lead to a (new) layer of prepreg adhering to the roller instead of being placed on the mould or previously applied prepreg(s), so that the "to-be-placed" prepreg may shift or separate from already placed tows or fibres of prepreg(s).

In this regard, CN 108 274 781 A relates to a fibre placement roller having a rigid body mounted on a roller shaft. A space between the roller shaft and the rigid body is divided into a plurality of independent spaces, wherein each space corresponds to a tow channel of a tow channel plate arranged next to the fibre placement roller. A plurality of through holes for gas circulation are provided on the roller rigid body corresponding to each space, and a plurality of through holes for gas circulation are also provided on a roller elastic body mounted on the roller rigid body.

Furthermore, US 2011/011 537 A1 relates to a fibre application machine for composite materials, the machine comprising a compacting roller for applying a band formed of at least a resin pre-impregnated flat fibre, and a rigid central tube, whereby the roller is rotationally mounted on a support structure of the machine. A cylinder made of an elastically deformable, flexible or non-rigid material is co-axially assembled on the central tube. Furthermore, the central tube is provided with radial holes, so that the flexible material cylinder has a fluid communication system adapted to establish fluid communication between the radial holes and the external surface of the cylinder, while a thermal regulation gas can be injected in the internal passage of the central tube.

US 2017/080646 A, FR 3 1 33 334 A1, US 7,222,710 B2, and JP 2005 297513 A provide further technological background.

It is therefore an object of the present disclosure to provide a prepreg application apparatus that requires less cleaning efforts and provides for an improved prepreg lay-up.

This object is solved by the present invention as defined in the independent claims. Preferred embodiments are defined by the dependent claims.

According to a first aspect to better understand the present disclosure, a prepreg application apparatus comprises an air supply duct having a lumen configured to guide an air stream, a prepreg compacting body configured to set a position of a prepreg, the prepreg compacting body having a porous surface in fluid communication with the lumen of the air supply duct and configured to release air of the air stream to an area ambient to the prepreg compacting body, and an air conveying device configured to control a power of the air stream ensuring that the air emanates from the prepreg compacting body at the porous surface when being on or close to the prepreg.

Thus, the porous surface allows air to emanate in the direction of the prepreg, so that an air film is generated when the prepreg compacting body, i.e. the porous surface, approaches the prepreg. In other words, the conveying device can be controlled to convey air into the lumen of the air supply duct to such an extent that the air emanating the porous surface builds up and forms an air cushion. Specifically, the air can flow through the porous surface, if the porous material (particularly, the porous surface) is unobstructed. In case of an obstruction of the porous material, such as if the porous surface comes close to or into contact with a prepreg, a pressure builds up due to the air stream and the air cushion or air film is generated between the prepreg material and the porous surface. As a mere example, the thickness of the air cushion/film is within the range of micrometres, such as between 0 and 200 µm, preferably between 10 and 100 µm, and most preferably between 5 and 50 µm.

In an ideal situation, the prepreg compacting body, particularly its porous surface, would not come into contact with the prepreg material due to the thin air film or air cushion generated between the prepreg compacting body and the prepreg material. In this case, there would be neither adhesion nor friction.

In any case, adhesion of the prepreg compacting body with respect to the prepreg material is reduced and, hence, friction between the prepreg compacting body and the prepreg material is reduced. The prepreg application apparatus, hence, can be moved more easily over the prepreg, in order to apply, i.e. place, the prepreg to a mould or previously applied prepreg and the like. Thus, the lay-up process or draping process with tacky material can be performed fastener, particularly when automated.

In addition, prepreg material, particularly tacky resin thereof, will not accumulate on the prepreg compacting body or at least accumulation of tacky material is reduced, so that less cleaning of the apparatus and particularly the prepreg compacting body is required. This facilitates operating durations of the apparatus and reduces costs for the operator due to less maintenance efforts. Failures during the production are also reduced, which further reduces costs.

The prepreg compacting body is configured to apply the prepreg to a mould or a previously placed prepreg. This applying can comprise guiding the prepreg and/or laying out the prepreg and/or compacting the prepreg (e.g., by pressing the prepreg onto the mould or previously placed prepreg).

The prepreg application apparatus can be operated manually, such as being a handheld and/or hand-operated apparatus, or can be part of an automated apparatus, such as an automated fibre placement (AFP) apparatus, which may include a robot (arm) or the like. In an automated fibre placement (AFP) apparatus, the prepreg compacting body can be configured to position the prepreg and, e.g., at the same time, set or fix the position of the prepreg relative to a mould.

A further advantage can be achieved in cases where a backing paper is employed, particularly when the backing paper is used between the prepreg material and any other component, including draping rollers. Specifically, due to the air film/cushion, such backing paper can be omitted. This further reduces costs and decreases production time of the composite structure made from the prepreg material.

In addition, the prepreg application apparatus further comprises a cover covering at least a portion of the prepreg compacting body and configured to at least partially block the air from emanating through the porous surface. As a mere example, the cover can be arranged at a region of the prepreg compacting body that is not closed to or in contact with the prepreg material. In case of a rotational prepreg compacting body, the cover may cover a portion of the prepreg compacting body opposite to the portion of the prepreg compacting body intended to apply/place the prepreg material on its substrate. Furthermore, the rotational prepreg compacting body is also movable relative to the cover. Thus, the porous surface can glide along the cover, which hinders the air inside of the porous material to emanate.

This facilitates generation of the air film or air cushion at the prepreg, since the air of the air stream can only emanate from the porous surface in the region/area of the prepreg compacting body intended to apply/place the prepreg material on its substrate.

In an implementation variant, the air supply duct can at least partially form a hollow axis, around which the prepreg compacting body is arranged. In other words, the air supply duct is at least partially arranged inside of the prepreg compacting body, i.e. it extends into the interior area of the prepreg compacting body. The air stream, hence, leaves the air supply duct in an interior area of the prepreg compacting body. Thus, the air stream guided by the air supply duct (particularly by its lumen) is released inside of the prepreg compacting body and can distribute over and stream through the porous material to emanate the prepreg compacting body.

In an implementation variant, the prepreg compacting body can comprise a core element, wherein the porous surface is provided on the core element. In other words, the porous material can form a hull or a layer on the core element. Thus, the amount of porous material required to form the porous surface can be reduced. In addition, it is likewise possible that the core element is configured to distribute the air stream inside of the prepreg compacting body, so that an equal air distribution throughout the porous surface can be achieved. As a mere example, the core element can be made from a metallic material, a plastic material, a composite material or the like. Such core element can be provided with a plurality of openings or through holes at a section where the porous material is applied, so that the air stream can be distributed to the openings or through holes and can further stream into the porous material.

In an implementation variant, the core element can be configured to move relative to the air supply duct. This allows to have a fixed air guiding component, while only the core element and, hence, the porous surface provided thereon, move relative to the supply duct. As a mere example, the prepreg application apparatus can be moved relative to the prepreg, while the porous surface can adapt to the surface of the prepreg during such movement by the relative movement with respect to the air supply duct.

As a mere example, the prepreg application apparatus (or at least the prepreg compacting body) is moved along a path, where the prepreg is to be laid out, such as a linear or curved path.

In an implementation variant, the porous surface can have a substantially flat shape. Such flat surface facilitates applying the prepreg onto its substrate (e.g., a mould or already placed prepreg). As a mere example, the flat porous surface can be provided only on a side of the prepreg compacting body that is employed for applying the prepreg to its substrate, while the remaining surface of the prepreg compacting body is not equipped with a porous surface.

Further as a mere example, the remaining surface of the prepreg compacting body may be airtight, so that the air of the air stream emanates solely through the porous surface, where the prepreg compacting body is close to and applies the prepreg. This reduces the amount of air to be conducted by the air conveying device.

In an implementation variant, the prepreg compacting body can form a roller. In this case, the porous surface can be an exterior circumferential surface of the prepreg compacting body. Thus, the prepreg compacting body rolls over the prepreg material like a wheel and can apply/place the prepreg material onto its substrate in a smooth manner. In this regard it is advantageous, if the prepreg compacting body (with or without core element) is movable relative to the air supply duct.

As a mere example, the prepreg application apparatus (or at least the prepreg compacting body) is moved along a path, where the prepreg is to be laid out, such as a linear or curved path, while the porous surface (and optionally the core element) can rotate around the air supply duct.

In an implementation variant, the prepreg application apparatus can further comprise at least one bearing supporting the prepreg compacting body and allowing a rotational movement of the prepreg compacting body relative to the air supply duct.

According to an option, the at least one bearing may be mounted to an axle or spindle, which is configured to be moved along the prepreg, while the prepreg compacting body can rotate around the axle or spindle. According to another option, the at least one bearing may be mounted to the air supply duct, so that the prepreg compacting body is mounted to and can rotate around the air supply duct. The latter option facilitates the structure of the prepreg application apparatus.

In an implementation variant, the prepreg application apparatus can further comprise at least one air seal provided between the air supply duct and the prepreg compacting body. Since the prepreg compacting body can move relative to the air supply duct, the air seal hinders air of the air stream to leak from the interior of the prepreg compacting body at an edge in close proximity of the air supply duct.

In an implementation variant, the porous surface can be made from a graphite material, preferably pyrolytic graphite, a sintered metal or porous ceramic. Such materials allow an equal distribution of air throughout the porous surface, and further reduces adhesion of tacky material, such as resin, to the porous surface.

According to a second aspect to better understand the present disclosure, a prepreg application system comprises a mould configured to receive a prepreg thereon, and a prepreg application apparatus of the first aspect or one or more of its variants.

Specifically, the prepreg application apparatus can be moved along the mould, so that the prepreg compacting body presses the prepreg towards the mould. This facilitates applying a prepreg onto the mould or onto already placed prepreg(s), i.e., the substrate of the to be placed prepreg. The prepreg compacting body can further be configured to apply a pressure onto the prepreg, so that the prepreg is compacted, i.e. the prepreg material is thicker before the prepreg application apparatus has moved over the prepreg material and is thinner thereafter. Such compact prepreg material will have less or no air (bubbles) captured in the tacky material (resin), and the fibres of the prepreg material will be better aligned along the shape of the mould.

In the following, the present disclosure will further be described with reference to exemplary implementations illustrated in the figures, in which:
- Figure 1: schematically illustrates a perspective view of an exemplary prepreg application apparatus;
- Figure 2: schematically illustrates a cross-sectional view of the prepreg application apparatus of Figure 1;
- Figure 3: schematically illustrates a perspective view of another exemplary prepreg application apparatus;
- Figure 4: schematically illustrates a cross-sectional view of the prepreg application apparatus of Figure 3;
- Figure 5: schematically illustrates an exemplary prepreg application system;
- Figure 6: schematically illustrates another exemplary prepreg application system; and
- Figure 7: schematically illustrates yet another exemplary prepreg application system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

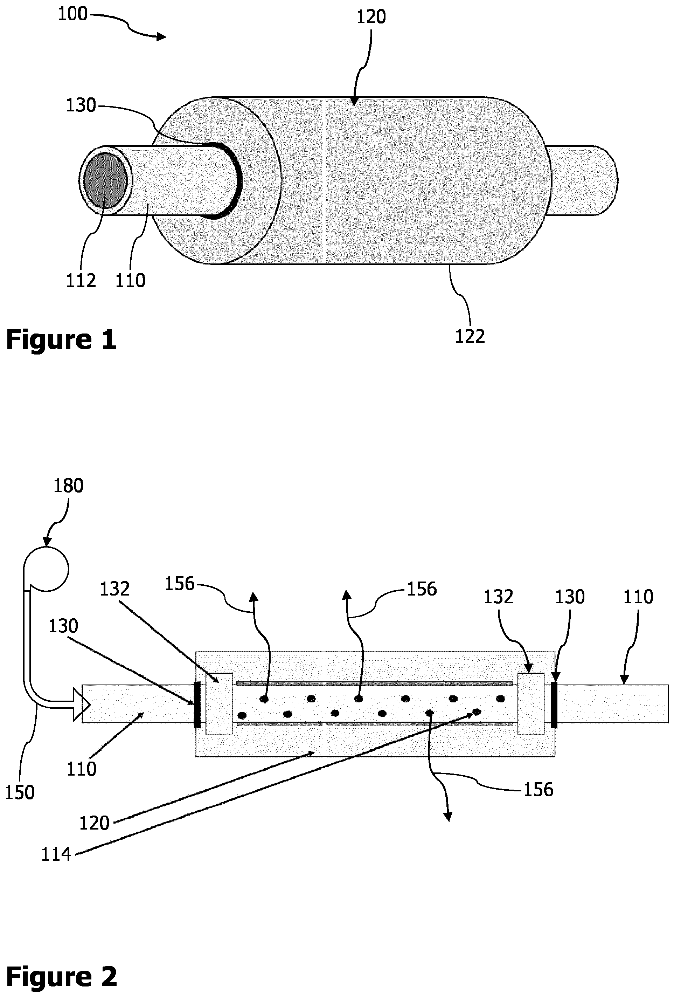

Figures 1 and 2 schematically illustrate a perspective view and a cross-sectional view of an exemplary prepreg application apparatus 100, respectively. The apparatus 100 comprises an air supply duct 110 having a lumen 112 configured to guide an air stream 150. The air supply duct 110 can be made from a metallic or plastic material, and can form an axle of the prepreg application apparatus 100.

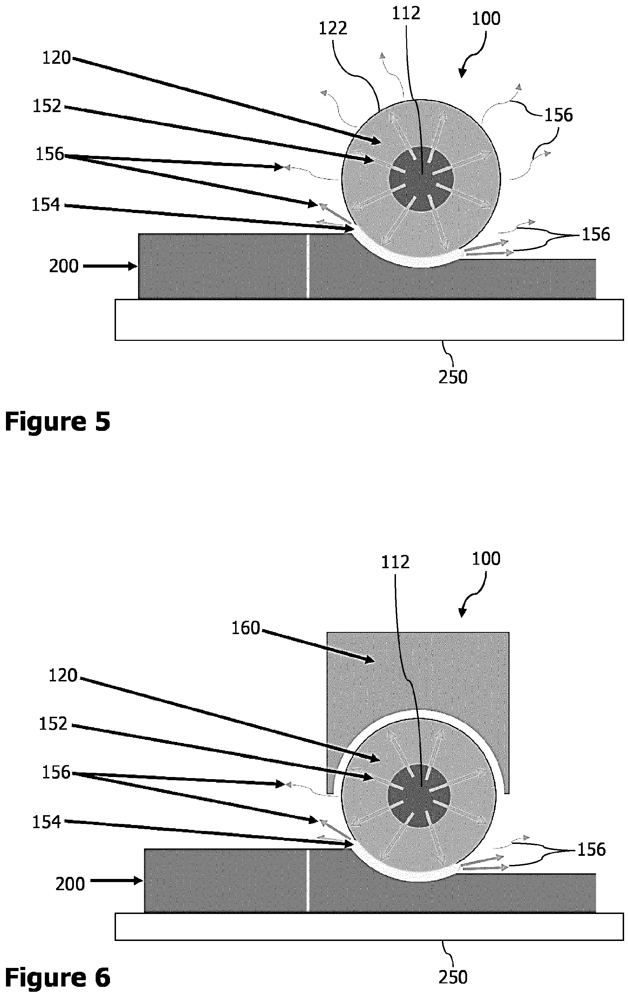

The prepreg application apparatus 100 further comprises a prepreg compacting body 120 configured to set or fix a position of the prepreg 200 with respect to a mould 250 (Figures 5 to 7) or even position the prepreg 200 on the mould 250. In the exemplary prepreg application apparatus 100 of Figures 1 and 2, the prepreg compacting body 120 forms a roller, such as a cylinder or drum. This round form facilitates rolling over the prepreg 200, while applying/placing the prepreg 200.

The prepreg compacting body 120 has a porous surface 122 that is in fluid communication with the lumen 112 of the air supply duct 110. As a mere example, the air supply duct 110 can have one or more through holes 114 through which air can leave the lumen 112. As illustrated in Figure 2, the one or more through holes 114 are arranged in a region of the air supply duct 110, where the prepreg compacting body 120 is arranged, i.e. where the prepreg compacting body 120 surrounds the air supply duct 110. Thus, the air streaming from the lumen 112 through the through holes 114 will be inside of the prepreg compacting body 120, and particularly, inside of the porous material forming the porous surface 122.

In the exemplary prepreg application apparatus 100 of Figures 1 and 2, the porous surface 122 is an exterior circumferential surface of the prepreg compacting body 120. Thus, the porous surface 122 forms a wheel tread of the wheel-like or roller-like prepreg compacting body 120.

The prepreg application apparatus 100 further comprises an air conveying device 180, which is only schematically illustrated in Figure 2. The air conveying device 180 is configured to convey air into the lumen 112 of the air supply duct 110. In other words, the air conveying device 180 generates an air stream 150 that is guided into the air supply duct 110, from where the air stream 150 can emanate through the through holes 114.

Furthermore, the air conveying device 180 can further be configured to control a power of the air stream 150. Specifically, the porous surface 122 of the prepreg compacting body 120 is configured to release air 156 of the air stream 150 (illustrated exemplarily for three through holes in Figure 2) into an area ambient to the prepreg compacting body 120. In other words, the porous surface 122 allows air to be released to the outside of the body 120. The air conveying device 180 can control the power of the air stream 150 to ensure that the air 156 emanates from the prepreg compacting body 120 at the porous surface 122 being on or close to the prepreg 200. This will be explained in more detail with respect to Figures 5 to 7.

The porous surface 122 can be made by/from a graphite material, for example, a pyrolytic graphite, or a sintered metal or porous ceramic. Such materials have fine pores usually fluidly connected to one another, so that air 156 can stream through the porous material and can emanate at/from the porous surface 122.

Thus, the air conveying device 180 generates an air stream 150 introduced into the lumen 112 of the air supply duct 110. The air supply duct 110 can at least partially form a hollow axis around which the prepreg compacting body 120 can be arranged. The air 156 of the air stream 150 is released from the air supply duct 110 and can stream to the porous material of the prepreg compacting body 120, and can then emanate from the porous surface 122.

The prepreg application apparatus 100 can further comprise at least one bearing 132 supporting the prepreg compacting body 120 and allowing a rotational movement of the prepreg compacting body 120 relative to the air supply duct 110. As a mere example, Figure 2 illustrates two bearings 132 arranged at/on the air supply duct 110. Each bearing 132 can, for example, be a ball bearing, rolling bearing or the like facilitating a relative movement of the prepreg compacting body 120 around the air supply duct 110. The present disclosure is not restricted to the illustrated number of bearings 132, but less or more than two bearings 132 can be employed.

In order to avoid air to be released from the interior space or area of the prepreg compacting body 120 at the ends of the body 120, at least one air seal 130 can be provided between the air supply duct 110 and the prepreg compacting body 120. As a mere example, as illustrated by a darker grey colour, a space can be provided between the exterior of the air supply duct 110 and the interior of the prepreg compacting body 120, which is filled with air from the air stream 150. This space or gap can be closed at the respective ends of the prepreg compacting body 120 by respective seals 130. It is to be understood that in the areas of the bearings 132, such space or gap can be interrupted by the bearing 132.

In the exemplary prepreg application apparatus 100 of Figures 1 and 2, the prepreg compacting body 120 can be entirely made from the porous material forming the porous surface 122.

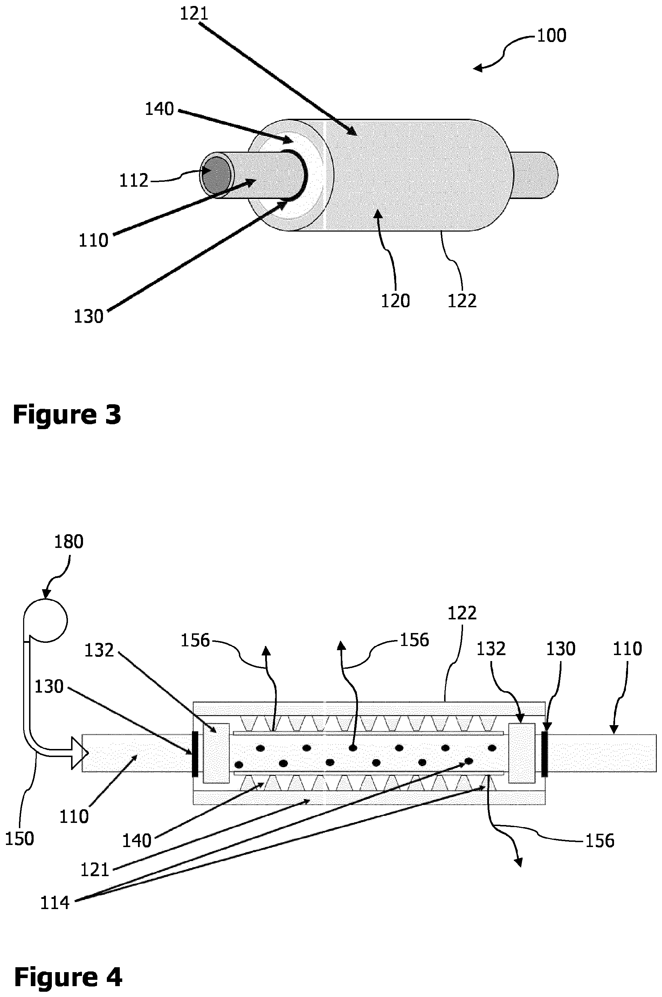

In another exemplary prepreg application apparatus 100 illustrated in Figures 3 and 4, the amount of porous material may be reduced. In this variant, the prepreg compacting body comprises a core element 140, and the porous material 121 forming the porous surface 122 is provided on the core element 140, such as surrounding the core element 140 circumferentially.

Figures 3 and 4 schematically illustrate a perspective and a cross-sectional view of this exemplary prepreg application apparatus 100, where components and elements of the apparatus 100 being identically or at least functionally the same to those of the exemplary apparatus 100 of Figures 1 and 2 are provided with the same reference numerals. While reference numeral 120 in Figures 1 and 2 refer to the prepreg compacting body as well as the porous material (since the body 120 (almost) entirely consists of the porous material), in Figures 3 and 4 the porous material is referred to as 121 to distinguish it from the core element 140. In order to avoid repetitions, a redundant description of the same elements and components as in Figures 1 and 2 has been omitted.

As can be derived from Figure 4, the through holes 114 in the air supply duct 110 release air from the air stream 150 towards the core element 140. There can be a gap between the core element 140 and the air supply duct 110 facilitating distribution of the air. The core element 140 itself can comprise a porous material and/or through holes (also referred to as through holes 114 in Figure 4) to guide the air of the air stream 150 to the porous material 121.

Thus, air 156 of the air stream 150 can be guided through the air supply duct 110, stream through the core element 140 and through the porous material 121, in order to emanate at the porous surface 122.

Furthermore, Figure 5 schematically illustrates an exemplary prepreg application system. For instance, the prepreg application system can comprise a mould 250, which is only exemplarily illustrated as a flat form or tool, but can have any shape required for forming the composite structure made from the prepreg(s).

Furthermore, the prepreg application system can comprise a prepreg application apparatus 100, such as the apparatus 100 of either Figures 1 and 2 or Figures 3 and 4. The prepreg application apparatus 100 is moved along the mould 250, so that the prepreg compacting body 120 of the apparatus 100 applies and further presses the prepreg 200 towards the mould 250. As illustrated in Figure 5, the prepreg application apparatus 100 moves from the right to the left and applies the prepreg 200 to the mould 250. By applying a pressure onto the prepreg 200, any air can be removed from the prepreg 200 and a snuggly fit of the prepreg 200 of the mould 250 can be achieved. Likewise, one or more subsequent layers of prepreg(s) can be applied onto an already laid out prepreg 200 in the same manner. Figure 5 does not illustrated how the prepreg 200 is provided to the system, as this does not form part of the present disclosure. Any given technique to provide the prepreg 200 to the system can be employed.

As can be derived from Figure 5, the air from the air stream 150 (provided through the lumen 112) flows through the porous material 120/121. This flow of air is referred to as 152 in Figure 5. In other words, air 152 is from the air stream 150 and distributes throughout the interior of the prepreg compacting body 120. At the porous surface 122, the air 152 emanates from the porous surface 122. In the area, where the porous surface 122 is close to or on the prepreg 200, an air cushion 154 builds up, as the air cannot emanate in the same manner as in the area, where no prepreg 200 obstructs the porous surface 122. Specifically, the air conveying device 180 can control a power of the air stream 150, for example, a volume flow and/or mass flow of the air stream 150, so that the air inside the prepreg compacting body 120 is pressurised and the emanating air 156 can form the pressurised air cushion 154.

Figure 6 schematically illustrates another exemplary prepreg application system. This prepreg application system corresponds to that of Figure 5, so that the description of identically or functionally same features will be omitted. These features are provided with the same reference numerals.

Specifically, in the system of Figure 6, the prepreg application apparatus 100 comprises a cover 160 covering at least a portion of the prepreg compacting body 120. The cover 160 may be provided in a fixed manner relative to the air supply duct 110. In the exemplary system of Figure 6 (as well as Figure 5) the prepreg compacting body 120 can rotate around the air supply duct 110, and, hence, can move relative to the cover 160. In other words, the prepreg compacting body 120 can rotate in a cavity or recess formed by the cover 160.

By covering the prepreg compacting body 120 and, hence, a portion of the porous surface 122, the cover 160 is further configured to at least partially block the air 156 from emanating from/through the porous surface 122. This increases the amount of air forming the air cushion 154, which facilitates building the air cushion 154 and further reduces the amount of air 150/152 to be conveyed by conveying device 180.

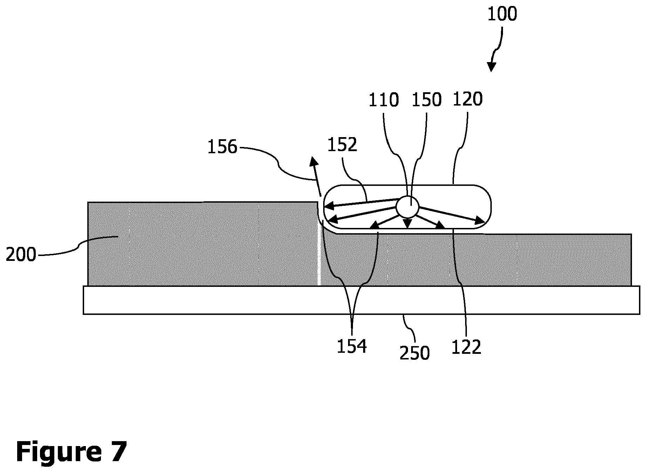

Figure 7 schematically illustrates yet another exemplary prepreg application system. This prepreg application system includes elements and components identical to or functionally the same to that of Figures 5 and 6, so that the description of such identical or functionally same features will be omitted. These features are provided with the same reference numerals throughout all drawings.

In the exemplary system of Figure 7, the prepreg compacting body 120 or at least the porous surface 122 (or a section thereof) has a substantially flat shape. As can be derived from Figure 7, the flat surface at the bottom of the prepreg compacting body 120 can be (substantially) flat. This is possible due to the air cushion 154 formed between the body 120 and the prepreg 200 and significantly reducing adhesion and friction. Such flat surface 122 facilitates flattening the prepreg 200 while applying it to the mould 250. Thus, the prepreg compacting body 120 functions like an "iron" for textiles.

Since such flat prepreg compacting body 120 does not need to rotate, the porous material forming the porous surface 122 can be applied only in one or more regions of the body 120, which apply the prepreg 200 to the mould 250. For instance, the porous surface 122 can be provided at the flat (bottom) region of the body 120. This not only reduces the amount of porous material required for the prepreg application apparatus 100, but further allows omitting a specific cover 160 (cf. Figure 6), wherein said option is not part of the claimed subject matter.

Instead, the upper region of the prepreg compacting body 120 can be made from an airtight material, so that the air stream 150 from the air supply duct 110 is guided solely to the flat (bottom) region of the body 120 and the porous surface 122.

It is to be understood, that a front section (to the left in Figure 7) may have a round shape and may also be provided with a porous surface 122. In other words, the prepreg compacting body 120 can be made specifically for applying the prepreg 200, i.e. a porous surface 122 is only applied in regions of the body 120, where the body 120 will be close to or comment or contact with the prepreg 200.

Since one (upper) region of the prepreg compacting body 120 is different from another (bottom) region, such prepreg application apparatus 100 can include a core element 140, which is equipped with through holes 114 only in the region where the porous material forming the porous surface 122 is provided. Thus, a very simple prepreg application apparatus 100 can be formed.

## Claims

1. A prepreg application apparatus (100), comprising:
an air supply duct (110) having a lumen (112) configured to guide an air stream (150);
a prepreg compacting body (120) configured to set a position of a prepreg, the prepreg compacting body (120) having a porous surface (122) in fluid communication with the lumen (112) of the air supply duct, and configured to release air (156) of the air stream (150) to an area ambient to the prepreg compacting body;
an air conveying device (180) configured to control a power of the air stream (150) ensuring that the air (156) emanates from the prepreg compacting body at the porous surface (122) when being on or close to the prepreg (200); and
a cover (160) covering at least a portion of the prepreg compacting body (120), wherein the cover (160) is configured to at least partially block the air (156) from emanating through the porous surface (122).

2. The prepreg application apparatus (100) of claim 1, wherein the air supply duct (110) at least partially forms a hollow axis, around which the prepreg compacting body (120) is arranged.

3. The prepreg application apparatus (100) of claim 1 or 2, wherein the prepreg compacting body comprises a core element (140), wherein the porous surface (122) is provided at least on a portion of the core element (140).

4. The prepreg application apparatus (100) of claim 3, wherein the core element (140) is configured to move relative to the air supply duct (110).

5. The prepreg application apparatus (100) of one of claims 1 to 3, wherein the porous surface (122) has a substantially flat shape.

6. The prepreg application apparatus (100) of one of claims 1 to 4, wherein the prepreg compacting body (120) forms a roller, and wherein the porous surface (122) is an exterior circumferential surface of the prepreg compacting body (120).

7. The prepreg application apparatus (100) of claim 6, further comprising:
at least one bearing (132) supporting the prepreg compacting body (120) and allowing a rotational movement of the prepreg compacting body (120) relative to the air supply duct (110); and/or
at least one air seal (130) provided between the air supply duct (110) and the prepreg compacting body (120).

8. The prepreg application apparatus (100) of one of claims 1 to 7, wherein the porous surface (122) is made from a graphite material, preferably pyrolytic graphite.

9. A prepreg application system, comprising:
a mould (250) configured to receive a prepreg (200) thereon; and
a prepreg application apparatus (100) of one of claims 1 to 8,
wherein the prepreg application apparatus (100) is moved along the mould (250), so that the prepreg compacting body (120) presses the prepreg (200) towards the mould (250).

## Patentansprüche

1. Prepreg-Applikationseinrichtung (100), die Folgendes umfasst:
einen Luftzufuhrkanal (110) mit einem Lumen (112), das dazu ausgelegt ist, einen Luftstrom (150) zu leiten;
einen Prepreg-Verdichtungskörper (120), der dazu ausgelegt ist, eine Position eines Prepregs einzustellen, wobei der Prepreg-Verdichtungskörper (120) eine poröse Oberfläche (122) in Fluidverbindung mit dem Lumen (112) des Luftzufuhrkanals aufweist und dazu ausgelegt ist, Luft (156) des Luftstroms (150) in einen Bereich abzugeben, der den Prepreg-Verdichtungskörper umgibt;
eine Luftfördervorrichtung (180), die dazu ausgelegt ist, eine Leistung des Luftstroms (150) zu steuern, so dass sichergestellt wird, dass die Luft (156) von dem Prepreg-Verdichtungskörper an der porösen Oberfläche (122) ausströmt, wenn sie sich auf oder nahe dem Prepreg (200) befindet; und
eine Abdeckung (160), die zumindest einen Abschnitt des Prepreg-Verdichtungskörpers (120) abdeckt, wobei die Abdeckung (160) dazu ausgelegt ist, die Luft (156) zumindest teilweise daran zu hindern, durch die poröse Oberfläche (122) auszuströmen.

2. Prepreg-Applikationseinrichtung (100) nach Anspruch 1, wobei der Luftzufuhrkanal (110) zumindest teilweise eine hohle Achse bildet, um die herum der Prepreg-Verdichtungskörper (120) angeordnet ist.

3. Prepreg-Applikationseinrichtung (100) nach Anspruch 1 oder 2, wobei der Prepreg-Verdichtungskörper ein Kernelement (140) umfasst, wobei die poröse Oberfläche (122) zumindest auf einem Abschnitt des Kernelements (140) bereitgestellt ist.

4. Prepreg-Applikationseinrichtung (100) nach Anspruch 3, wobei das Kernelement (140) dazu ausgelegt ist, sich relativ zu dem Luftzufuhrkanal (110) zu bewegen.

5. Prepreg-Applikationseinrichtung (100) nach einem der Ansprüche 1 bis 3, wobei die poröse Oberfläche (122) eine im Wesentlichen flache Form aufweist.

6. Prepreg-Applikationseinrichtung (100) nach einem der Ansprüche 1 bis 4, wobei der Prepreg-Verdichtungskörper (120) eine Walze bildet, und wobei die poröse Oberfläche (122) eine Außenumfangsfläche des Prepreg-Verdichtungskörpers (120) ist.

7. Prepreg-Applikationseinrichtung (100) nach Anspruch 6, die ferner Folgendes umfasst:
mindestens ein Lager (132), das den Prepreg-Verdichtungskörper (120) stützt und eine Drehbewegung des Prepreg-Verdichtungskörpers (120) relativ zu dem Luftzufuhrkanal (110) ermöglicht; und/oder
mindestens eine Luftdichtung (130), die zwischen dem Luftzufuhrkanal (110) und dem Prepreg-Verdichtungskörper (120) bereitgestellt ist.

8. Prepreg-Applikationseinrichtung (100) nach einem der Ansprüche 1 bis 7, wobei die poröse Oberfläche (122) aus einem Graphitmaterial, vorzugsweise pyrolytischem Graphit, hergestellt ist.

9. Prepreg-Applikationssystem, das Folgendes umfasst:
eine Form (250), die dazu ausgelegt ist, ein Prepreg (200) darauf aufzunehmen; und
eine Prepreg-Applikationseinrichtung (100) nach einem der Ansprüche 1 bis 8,
wobei die Prepreg-Applikationseinrichtung (100) entlang der Form (250) so bewegt wird, dass der Prepreg-Verdichtungskörper (120) das Prepreg (200) in Richtung der Form (250) drückt.

## Revendications

1. Appareil d'application de préimprégné (100), comprenant :
un conduit d'alimentation d'air (110) présentant une lumière (112) conçue pour guider un écoulement d'air (150) ;
un corps de compactage de préimprégné (120) conçu pour régler une position d'un préimprégné, le corps de compactage de préimprégné (120) comportant une surface poreuse (122) en communication fluidique avec la lumière (112) du conduit d'alimentation d'air, et conçu pour libérer de l'air (156) de l'écoulement d'air (150) vers une zone ambiante du corps de compactage de préimprégné ;
un dispositif de transport d'air (180) conçu pour commander une puissance de l'écoulement d'air (150) assurant que l'air (156) émane du corps de compactage de préimprégné au niveau de la surface poreuse (122) lorsqu'il est sur le préimprégné (200) ou à proximité de celui-ci ; et
un couvercle (160) couvrant au moins une partie du corps de compactage de préimprégné (120), le couvercle (160) étant conçu pour empêcher au moins partiellement l'air (156) d'émaner à travers la surface poreuse (122).

2. Appareil d'application de préimprégné (100) selon la revendication 1, le conduit d'alimentation en air (110) formant au moins partiellement un axe creux, autour duquel le corps de compactage de préimprégné (120) est disposé.

3. Appareil d'application de préimprégné (100) selon la revendication 1 ou 2, le corps de compactage de préimprégné comprenant un élément central (140), la surface poreuse (122) étant fournie au moins sur une partie de l'élément central (140).

4. Appareil d'application de préimprégné (100) selon la revendication 3, l'élément central (140) étant conçu pour se déplacer par rapport au conduit d'alimentation en air (110).

5. Appareil d'application de préimprégné (100) selon l'une des revendications 1 à 3, la surface poreuse (122) ayant une forme sensiblement plate.

6. Appareil d'application de préimprégné (100) selon l'une des revendications 1 à 4, le corps de compactage de préimprégné (120) formant un rouleau, et la surface poreuse (122) étant une surface circonférentielle extérieure du corps de compactage de préimprégné (120).

7. Appareil d'application de préimprégné (100) selon la revendication 6, comprenant en outre :
au moins un palier (132) supportant le corps de compactage de préimprégné (120) et permettant un mouvement de rotation du corps de compactage de préimprégné (120) par rapport au conduit d'alimentation en air (110) ; et/ou
au moins un joint d'étanchéité à l'air (130) situé entre le conduit d'alimentation en air (110) et le corps de compactage de préimprégné (120).

8. Appareil d'application de préimprégné (100) selon l'une des revendications 1 à 7, la surface poreuse (122) étant en un matériau graphite, de préférence en graphite pyrolytique.

9. Système d'application de pré-imprégné comprenant :
un moule (250) conçu pour recevoir un préimprégné (200) sur celui-ci ; et
un appareil d'application de préimprégné (100) selon l'une des revendications 1 à 8,
l'appareil d'application de préimprégné (100) étant déplacé le long du moule (250), de sorte que le corps de compactage de préimprégné (120) presse le préimprégné (200) vers le moule (250).
